Europäisches Patentamt

European Patent Office

Office européen des brevets

(11) Publication number: **0 197 398**
**A1**

# EUROPEAN PATENT APPLICATION

(21) Application number: 86103919.6

(22) Date of filing: 21.03.86

(51) Int. Cl.⁴: **A01G 13/06 , A01G 9/24**

(30) Priority: 27.03.85 DK 1389/85

(43) Date of publication of application:
**15.10.86 Bulletin 86/42**

(84) Designated Contracting States:
**AT DE FR GB IT NL SE**

(71) Applicant: **Jensen, Niels Thorkild**
**Risingevej 17**
**DK-2660 Brondby Strand(DK)**

(72) Inventor: **Jensen, Niels Thorkild**
**Risingevej 17**
**DK-2660 Brondby Strand(DK)**

(74) Representative: **Tetzner, Volkmar, Dr.-Ing. Dr.**
**Jur.**
**Van-Gogh-Strasse 3**
**D-8000 München 71(DE)**

(54) **A cooling sprinkling system and a nozzle for use in the cooling sprinkling system.**

(57) The nozzle comprises a nozzle body (1) having a through-going hole (11) for conveying pressurized air, a nozzle head (20) mounted on the nozzle body (1) and comprising a pressure chamber (21) and an orifice (22) for pressurized air, a core (30) situated in the hole (11) and having a water passage duct (31), the water dicharge orifice edge (32) of which is essentially flush with the orifice (2), and a water fed tube (40) led through the nozzle body (1) and the core (30) to the duct (31). The level of the water discharge orifice (32) is adjustable relative to the orifice for pressurized air (22), whereby the size of the drops and the length of dispersal of the atomized water conveyed by the pressurized air are adjustable. The use of such nozzles only necessitates two nozzle pipes extending parallel to and at a distance from a hothouse wall each, as the nozzles are preferably mutually displaced. Each jet cone may be of a length of up to 20 meters, and the mist cone has a tendency to disperse in the shape of a gramophone horn or a megaphone funnel after having passed the opposite nozzle pipe.

Fig.1

Fig.2

## A cooling sprinkling system and a nozzle for use in the cooling sprinkling system.

The present invention relates to a cooling sprinkling system of the type described in the preamble of claim 1 and a nozzle for a cooling sprinkling system of the type described in the preamble of claim 4.

When growing hothouse plants there may in connnection with the sunlight intensity be the risk that the plants close their stomata almost momentarily and "sleep". Several hours may pass before the stomata are reopened, and the plant resumes its growth. This is counteracted by cooling the plant leaves by means of a water mist settling on the leaves and cooling these by the evaporation of the water drops. Pressure atomizer nozzles for use in this connection are known from e.g. NO printed accepted application No. 137,301; the nozzles are placed in nozzle pipes above the planting areas and each nozzle has a poor dispersing ability and they are consequently placed at intervals of 1-2 meters. These known nozzles, to which only water is conveyed under pressure, give a relatively big size of drops, which involves that the drops may remain hanging overnight and promote noxious attacks. A great number of these of nozzles must consequently be used in order to maintain the moistening and consequently the cooling at a practical level. In a hothouse having a length of 150 m and a width of 20 m it is necessary to use at least 450 nozzles dispersd on six nozzle pipes.

Such a nozzle is known e.g. from Danish Patent No. 139,131. It comprises a housing, to which pressurized water is conveyed, and a spindle led through the orifice, said spindle having a head with a downwardly facing rebound plate for leading the water radially out to form· a horizontal, plateshaped drop-forming body. The spindle is resilient enough for the side pressure of the water to centre it in the discharge duct. The spindle comprises between the rebound plate and the orifice a conical part of special shape with a convex central portion and formed in such a manner that the water flow is kept free of the rebound plate itself; as a result a thin, radially radiating water surface forming drops is obtained. These drops are, however, comparatively big and are only dispersed until a few meters from the nozzles, and they cover circular surfaces involving the risk of too much cooling or too little cooling.

For sprinkling purposes nozzles are also known having a displaceable element functioning as rebound plate for the outflowing water, and by means of the displacement of the rebound plate in the water feed tube it is capable either of assembling the water to yield af long compact jet or a dispersed rain of comparatively small, individually visible drops.

For use in air-conditioning spacecrafts and later also hothouses distributor plates for aqueous vapour have been developped, where water under a pressure of 30-40 atmospheres is atomized by being pressed through a large number of very fine holes produced by laser technique and having a diameter of a few μ. The high pressure necessitates one high-powered pump or two pumps located in series, and the fine holes necessitate the use of lime-free very clean water, i.e. that the water has to be purified by means of a number of filters in series, i.a. a ceramic filter. Practical tests have, even after repeated purification, shown that the holes of the distributor plate are nevertheless quickly clogged. A system comprising such distributor plates for hothouses is very expensive.

Water atomizer nozzles driven by pressurized air are furthermore known, wherein the atomization and mixture of the water with pressurized air is effected within the orifice of the nozzle, and wherein the pressure of the water as well as of the air can be adjusted exactly by means of two manometers. These nozzles only have an efficient jet length of 2.5 -3 meters and cost about Dkr. 1,700. - a set.

Nozzles for dispersing and atomizing fluids other than water are known, where the fluid is conveyed under pressure, and where the fluid conveying tube is tapered conically immediately in front of the orifice to increase the pressure of the fluid, said nozzles comprising a number of air discharge holes located round the fluid discharge orifice, cf. DE Offenlegunsschriften 28 22 687, 33 18 205 and 29 50 341 describing nozzles for pressurized-air guns for dyestuffs. These guns are intended to disperse dyestuffs within a restricted area and to an item situated only a short distance from the gun. A fuel nozzle for radiating high viscous fuel into a fuel chamber is known from DE Auslegeschrift No. 16 01 958. None of these nozzles is constructed to atomize water and ensure an efficient dispersal to a great distance from the orifice of the nozzle.

Particularly within the hothouse sector there is a need for watermist-forming systems making it possible by means of one and no more than two nozzle pipes, located about 3 meters above the plant level and having a few nozzles connected thereto at great intervals, to disperse a finely divided water mist with very small drops in the entire width, normally varying between 12 -20 meters of the hothouse.

It is the object of the present invention to provide a cooling sprinkling system, where the number of nozzle pipes and the number of nozzles on each nozzle pipe may be reduced relative to the prior art, and to provide a nozzle for use in such a system, said nozzle being capable of atomizing water to fine drops having a diameter between a few $\mu$, e.g. 8 -10 $\mu$ or less and up to about 100 $\mu$ and of securing an efficient dispersal of the atomized water of up to 20 meters from the nozzle. The costs of manufacture of the nozzle must furthermore be low.

The introductory cooling sprinkling system according to the invention is characterised by the subject matter of the characterising clause of claim 1. The nozzle according to the invention is characterised by the subject matter of the characterising clause of claim 4.

The system very quickly gives a strong formation of mist in the entire atomized area with very small drops, which are immediately almost drawn or sucked to the leaves, possibly on account of great potential differences, and settles on the under side as well as the upper side of the leaves. As a result the system is suitable for spreading pesticides, so that the strenuous work of manual spraying, which is often inadequate especially on the under sides of the leaves, where inter alia many fungi normally attack, is avoided completely.

If the system is utilized in a hothouse, it may be advantageous initially to spray from one of the nozzle pipes and thereafter from the other. As a result a smaller and thereby more inexpensive compressor may be used, and a still better coverage with a smaller water consumption is achieved, which is particularly advantageous when growing cuttings, where a perfect coverage is absolutely necessary. If a single nozzle pipe and a water tank are mounted on a tractor, the system is also suited for water cooling fields, for example tulip fields, from the windward side. The thin layer of water evaporates quickly, whereby the danger of noxious at tacks are reduced.

By constructing the nozzle as stated in the characterising part of claim 4 a nozzle is obtained, where the atomization is effected at the edge of the water discharge orifice and not within or by means of the common air and water discharge orifice. The nozzle according to the invention works at a very low water pressure, for example an excess pressure of 0 -0.3 atmospheres, which only has to be sufficient for conveying the water to the orifice, and with a pressure of the pressurized air conveyed to the cavity of the nozzle body of an excess pressure of 2.5 -8 atmospheres, preferably an excess pressure of about 5 atmospheres. Surprisingly this results in a very fine atomization of the water conveyed at low pressure. Just as surprisingly the drops disperse in the form of mist cones, which farthest from the nozzle assume the form of an open funnel (megaphone funnel) over large areas of up to 20 meter from the nozzle. As a result, for a cooling sprinkling system according to the invention, for example in hothouses of a length of 150 meter and a width of 20 meter, only two nozzle pipes placed parallel to the long walls and with comparatively few, for example a total of 50 nozzles, are required. This should be compared to the fact that previously 450 nozzles were needed for this purpose. By way of explanation it should be stated that in connection with the conventional atomizing of water within the orifice of the pressure chamber of a nozzle, the pressure and the amount of air are reduced considerably giving the known short jets. If on the contrary the water is atomized at or a short distance from the orifice by the air flowing out from the pressurized-air nozzle tearing the water away from the sharp edge of the orifice, the air pressure and the amount of air are maintained. It is thereby ensured that the pressurized air flows out at the greatest possible velocity and tears and disperses the water from the duct with the greatest possible strength. If the orifice of the water passage duct is situated a short distance outside the pressurized-air orifice it would mean a comparatively great air consumption and a great jet length with downwardly seeking, well atomized and well dispesed drops. When the water discharge orifice is placed closer to, but still is outside the pressurized-air orifice, the jet length will be somewhat shorter at a smaller consumption of pressurized air; the fine, atomized, well dispersed, downwardly seeking drops are, however, still obtained. Due to the suction ability of the pressurized air on the free water surface, no pressure is required in the water tube, to which water can be supplied from an open container with purified water, and to which a pesticide is optionally added. The nozzle gives fine, small mist drops to the last moment by falling pressure (closing), and there are no drops afterwards.

The nozzle pipes are preferably placed as stated in claim 2. As a result a new pattern of dispersal is surprisingly obtained in the form of cones ope ning further after the water mist has passed the nozzle pipe opposite the nozzle pipe, on which the nozzle in question is located. It is thus ensured that no part of the sprayed area remains unaffected by the cooling water mist.

Experience shows that the optimum dispersal of the water mist above and around the plants are ensured by the axis of the nozzles forming an angle of between 5 and 10° relative to the horizontal plane, cf. claim 3.

Furthermore according to the invention the conical water discharge orifice of the core ends in a sharp, outer, annular edge. It is thereby ensured that the pressurized air efficiently tears off the fine drops from the edge, cf. claim 5.

In order to adjust the nozzle for various purposes the core is displaceable relative to the nozzle body and the nozzle head, so that the water discharge orifice may be positioned in different levels relative to the pressurized-air orifice, cf. claim 6. The core is fixed in the chosen position to ensure that this adjustment is maintained during prolonged use.

As a result of being formed as satted in the characterising clause of claim 7 the outflow area of the pressurized air may be varied in such a manner that the outflow area is as small as possible in the position in which the orifices flush with each other. As a result a minimum size of the drops is ensured. This adjustment is best suited for reproduction systems.

A simple embodiment is obtained ensuring the free passage of the pressurized air past the core in the nozzle body, cf. claims 8 and 9

By means of a preferred embodiment as described in the characterising clause of claim 10, it is presumably obtained that the air and the water during discharge by means of friction against the material chosen are charged with a uniform polarity diverging from earth. As a result the drops repel each other and are drawn or sucked towards parts with earth potential and disperse evenly over the total surface thereof, in the example given especially the plant leaves, the top sides and under sides of the stems and the flowers, whereby they are cooled efficiently because of the evaporation of the water drops. This charging presumably also causes the drops to keep their drop sizes, so that they may drift far away from the nozzle. Concurrently they posses an earthseeking potential. This surprisingly limits the outflow of the mist through open skylights and consequent loss of water, which has been a problem in the systems hitherto used. It should, however, be mentioned that the consideration concerning electric charging of the water particles is of a purely theoretical nature not proved by tests.

By using hard plastics, which is a very resistant material, the nozzle body, the nozzle head and the core may be manufactured by pressure casting or on a lathe from a material bar, whereas the water feed tube may be manufactured by extrusion of from a bar on an automatic lathe. As a result the total production price of the nozzle according to the invention can be kept at a very low level and below Dkr. 10,-per nozzle. This should be seen in relation to the fact that the nozzles hitherto used and having a small dispersing ability cost from about Dkr. 400.-to about Dkr. 1,700.-a piece. As it appears from that stated above further savings are achieved by the fact that fewer nozzle pipes, and about 1/10 of the conventionally used number of nozzles have to be used. It is a well-known fact that if plastic nozzles are used there will be no permanent deposition of calcium oxide on or in the nozzle. Consequently, it is reasonable to replace clogged nozzles, if any, and the maintenance is thus made more economic and simple.

The presently preferred embodiment of the nozzle according to the invention will be described below with reference to the accompanying drawing, in which

Figure 1 is an enlarged sectional view of the nozzle according to the invention,

Figure 2 is an end view of a core with inserted water feed tube used in connection with the nozzle,

Figure 3 is a schematic top view of a section of a hothouse and illustrates the coolant pattern obtained by using the nozzle according to the invention, and

Figure 4 illustrates a nozzle according to the invention connected to a nozzle pipe.

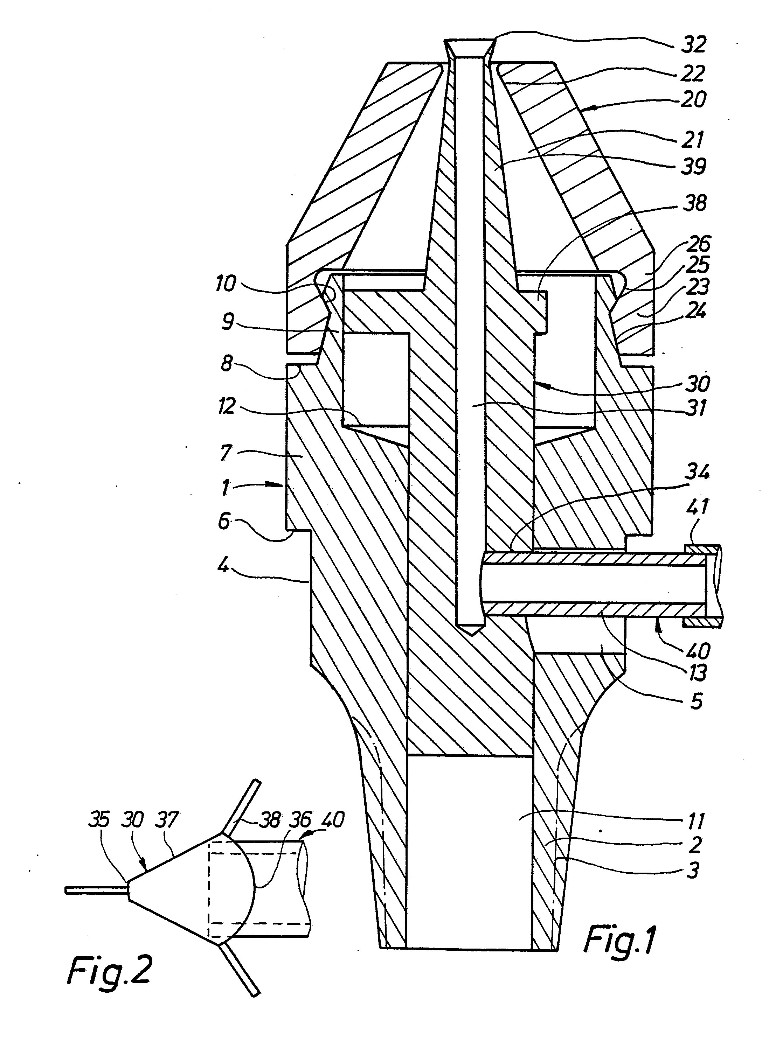

The nozzle illustrated in Figure 1 comprises a total of four parts, namely a nozzle body 1, a nozzle head 20, a core 30 and a water feed tube 40.

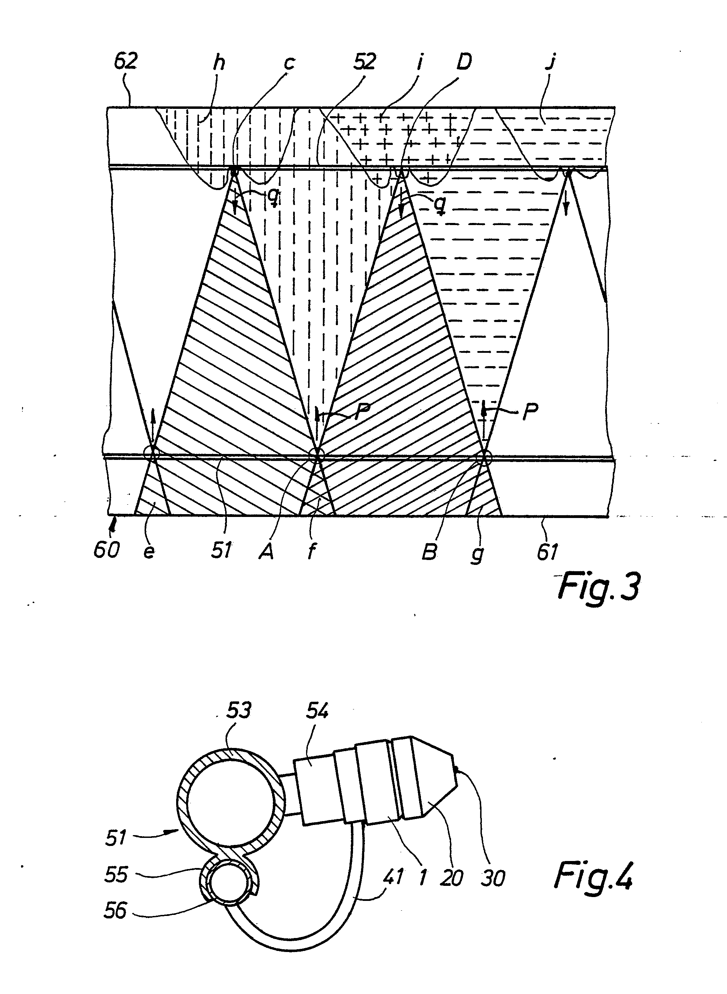

As illustrated in the drawing the nozzle body 1 is at the bottom formed like a plug having a conical male thread 3 constructed for mounting on a tube for pressurized air 53 (Figure 4) , through which the pressurized air is fed from a pressurized-air source (not shown). The outer diameter of the nozzle body 1 increases as far as a cylindrical portion 4. A radially extending, axially oblong bore 5 extending through the wall of the nozzle body 1 is formed in one place through the portion 4 for insertion of the water feed tube 40. The cylindrical portion passes through an outwardly projecting ledge 6 of the tube 40 into a cylindrical part 7 having a greater diameter. The part 7 ends at a radially extending annular surface 8, from which a conical sleeve 9 extends in upward direction. An outwardly projecting, inclined contact surface 10 is provided almost in the middle of the sleeve 9. The contact surface 10 is intented to maintain the nozzle head 20 by a snap-lock-effect. The nozzle body 1 comprises a through-going hole 11, which is stepped out at 12 and has a diameter greater than on the major portion of its length.

The nozzle head 20 is essentially conical and comprises upwardly tapering, through-going cavity of pressure chamber 21 ending in a discharge orifice for pressurized air 22. The nozzle head comprises at the bottom, as illustrated in the drawing, a circumferential locking flap 23. The locking flap 23 is provided with a lower, inwardly facing circumferential, inclined surface 23 which when mounted is parallel to the outer surface of the sleeve 9, and an upper, inwardly facing circumferential, inclined locking surface 25 parallel to the contact surface 20 and extending upwardly to a thin, circumferential wall portion 26. The wall portion 26 is of such a wall thickness and elasticity that the flap of the nozzle head 20 can be pushed down over the sleeve 9 until the locking flap 24 snaps over the contact surface 10. The nozzle head 20 is thereby locked sufficiently fixedly on the sleeve 9 for the connection not to be broken when the pressurized air at one to two atmospheric excess pressures is added through the hole 10 and the pressure chamber 21.

The core 30 comprises an axially extending water passage duct 31 in the form of a tube with a constant inner diameter until the orifice area - (Figure 1), which at the top ends in a funnel-shaped or conical water discharge orifice, and at the opposite end ends as a cul-de-sac. The vertex of the cone is within the duct 31 on its axis, and the water discharge orifice ends in a sharp, outer, circumferential edge at the reference number 32. The water feed pipe 40 is led into the channel 31 through a radial bore 43 close to the blind end. On the part of the core situated in the through-going hole 11 of the nozzle body 1 the core is of the essentially triangular cross-section illustrated in Figure 2 with rounded points. Contact faces 35, 36 are hereby formed for guiding the core 30 into the hole 11. This ensures that the pressurized air can pass in the cavity between the lateral faces 27 of the core 30 and the cylindrical inner faces of the nozzle body 1. The the top the core comprises guide projections for engaging the cylindrical inner face of the nozzle body 1 above the step 12. The point of the core is thereby centered in relation to the pressurized-air orifice 22. On the part led through the conical pressure chamber 21 of the nozzle head 20 the core is on its outside essentially formed as an upwardly tapering cone 39. In the area immediately at the water discharge orifice and opposite the discharge orifice for pressurized air the core 30 has the shape of an hourglass.

The water feed tube 40 is fixedly connected, e.g. welded or glued, to the core 30 in its radial bore 34 and is led through the oblong bore 5 of the nozzle body 1. When practical tests in the specific area of application, e.g. a hothouse, have decided, how the edge 32 of the water discharge orifice has to be adjusted the water feed tube 40 is fixed in this position. This may be done by friction, welding or adhesion. Water is supplied to the tube 40 through a hose 41, preferably a socalled drip hose. The water pressure is regulated for each nozzle pipe, preferably by means of a needle valve (not shown) known per se.

The parts of the nozzle can be made of a material preferably chosen among the group comprising materials such as plastics, ebonite, bakelite ®, ceramics, aluminium, stainless steel and alloys of copper and zinc, particularly brass.

It is preferred to manufacture the four parts of the nozzle of an electrically non-conductive material, especially platics, which is inexpensive and, particularly Delrin P.O.M. The nozzle body 1, the nozzle head 20 and the core 30 can thus be manufactured economically by pressure casting or be machine-processed, whereas the water feed tube 40 can be made by extrusion or be machine-processed.

With known systems experience has in connection with pressure atomization of water under formation of comparatively small drops shown that the drops are very cold due to the speed of evaporation and the small content of water compared to the surface area. Aqueous vapour is condensed on the surface of the drops on account of this strong cooling, and the comparatively big drops formed are led through the windows by buoyancy in the hothouse 60. The moisture is thereby extracted from the hothouse. As a result the known pressure atomizer systems are not completely satisfactory for cooling leaf surfaces e.g. by reproduction of cuttings.

When the nozzle according to the invention is used a number of nozzles are situated having comparatively large cavitys of e.g. 5 -6 meters and displaced relative to each other on two nozzle pipes 51, 52, through which pressurized air and water are led to the nozzles A, B, C, and D etc., cf. Figure 3. As it appears from Figure 3 there are only two nozzle pipes 51, 52 normally situated not more than about 2 meters from the long walls 61, 62 of the hothouse 60, and preferably close to the walls.

Figure 4 illustrates a sectional view of a nozzle pipe 51 consisting of a pressurized-air tube 53 comprising a number of interspaced, known pressure branch pipes 54 (only one is shown) (cf. Figure 3), to which the nozzle bodies 1 are sealingly screwed. A clamp 55 is form on the tube 53, through which clamp 55 a water hose 56 is embedded. Drip hoses 41 are sealingly connected to the water hose 56.

The nozzles are preferably located in such a manner that they form an angle of between 5° and 10° relative to the horizontal plane and in such a manner that the nozzles of one nozzle pipe face the other nozzle pipe.

The water is led from the water hose 56 through the drip hose 41 and the duct 31 to the orifice 32 at a low pressure of between 0 and 0.3 atmospheric excess pressure at the water discharge orifice 32, whereas pressurized air is supplied from the pressurized-air tube and through the hole 11 at a pressure, which may be of from 2.5 to 8 atmospheric excess pressures, preferably about 4 - 5 atmospheric excess pressures. This air pressure is sufficient to tear the water away from the orifice 32, supported by a pressure chamber effect in the pressure chamber 21 of the pressure head 20. The outflowing water is dispersed conically in the direction of the arrows p and q from the nozzles A and B, and C and D, respectively, in the form of finely divided water particles over a surprisingly large area in a distance of up to 20 meters from the nozzle in question. Simultaneously the water particles seek towards the plant leaves and stems. Although not proved this may be due to the fact that the water at the nozzle passage is charged with a potential diverging from earth. The plant parts are supposed thereby to suck or draw the water particles in the same manner as when a rain cloud starts raining over a premoistened area and does normally not start raining over a dry area. As a result essential amounts of water are prevented from being sucked out through the windows with the draught. A pattern of dispersal should be expected for the nozzles C and D of the nozzle pipe 52 as shown hatched in Figure 3 with only minor overlappings between the patterns of dispersal behind the second nozzle pipe 52, as shown for the areas e, f and g. Practical tests have, however, proved that a pattern of dispersal is obtained in the shape of a gramophone horn or a megaphone funnel, e.g. dispersal cones opening further after the water particles in the cones have passed the opposite nozzle pipe. This pattern of dispersal is furthered by means of the slight vacuum formed around each nozzle by the surrounding air and thereby the mist of the oppositely located nozzle being sucked by means of the air flow of the first nozzle in question.

This patten of dispersal is shown in Figure 3 for the nozzles A and B on the nozzle pipe 51, in which Figure a top view of the actually achieved patterns of dispersal appears from the areas h, i, and j. An efficient cooling sprinkling of all the plants in the hothouse is consequently obtained.

The nozzle is adjustable between two extreme positions. In the first position shown the edge 32 of the water discharge orifice is placed 1 -2 mm outside the edge of the discharge orifice 22 for pressurized air. When the water feed tube 40 is positioned in its lowermost position, the edge 32 of the water discharge opening flushes with the edge of the air orifice.

The farther the edge 32 of the water discharge orifice is outside the discharge orifice for pressurized air, the greater are the amount of air and the jet length. About 2 minutes after the initiation of the jet, persons in the hothouse will sense a heavy increase of the moisture, which dependent on the moisture percentage and the temperature (the dew point) may show as moisutre on clothes and skin. The size of the drops depends on the pressure of the water and the sucking ability of the pressurized air, which are both adjustable. Downwardly seeking, well atomized drops are formed, and the dispersal is good. The core 30 adjusted in the outermost position gives the optimum jet length, i.e. that this adjustment is best suited for wide hothouses.

When the orifices 32 and 22 flush, the air consumption is as small as possible, and the jet length is somewhat smaller than in the first case. The size of the drops depend on the water pressure, but is always very small. The drops drift far away and are downwardly seeking with a good dispersal to the sides.

The nozzle according to the invention is suited both for an ordinary cooling moistening of big plants, but is also particularly suited for reproduction systems.

The nozzle is drip-free in all positions. The efficient dispersal of water ensures an efficient cooling of the plant leaves, which is particularly desirable to avoid getting plants which are sleeping on account of the high jet intensity from the sun light.

The water consumption of the individual nozzle varies between 300 and 400 ml/min, and the water pressure at the orifice varies between 2.5 -8 atmospheric excess pressures. Air of 2.5 -8 atmospheric excess pressures causes the air to suck the water, which is practically non-pressurized, out of the water discharge orifice at 32 and atomizes it. · An efficient dispersal being obtained with drops seeking towards the plants, the nozzles are only to be used for a few minutes at a time, and a 3/4 minute often suffices. The consumption of the preferably collected purified rain water, which may be scarce, is consequently reduced.

It should be mentioned as an example of the efficiency of the nozzle that a hygrometer, which in connection with the water-dispersing nozzles hitherto used in hothouses reacts in 10 -15 minutes, reacts in 3/4 -1 minute by using the nozzle according to the invention.

The nozzle described above comprises a cylindrical orifice. The nozzle may also be made with a flat orifice in order to obtain special patterns of dispersal. The nozzle can furthermore be constructed in different ways, if only at least the nozzle head and the core are made of an electrically non-conductive material, which can effect an electrical recharge and division into fine particles of the very small outflowing water drops.

Other embodiments are also applicable. The · threaded plug 1 of the nozzle body 1 may e.g. be replaced by a plug sleeve adapted to the connecting piece for pressurized air. The nozzle body 1 may be formed as a straight cylinder or preferably with a hexagonal surface to be screwed into the radially extending surface 8 having an outer diameter corresponding to the outer diameter of the portion 4 and optionally starting at the bottom surface of the said sleeve. The guide projections 38 of the core 30 may be omitted, in which case the nozzle body 1 and the nozzle head 20 may be integrally formed, and the core 30 may be circular and comprise one or several ducts for passage of · pressurized air and guide ribs (not shown) for engaging guide grooves in the wall of the hole 11. Together with the hole the core may further be of an essentially triangular, quadrangular or pentagonal cross-esction adapted in such a manner that it is always correctly inserted relative to the radial hole 13. The connection for the pressurized air can be situated in the lower area of the nozzle head 20. The outer shape of the nozzle head may be cylindrical and the pressure chamber 21 may be enlarged.

As it is inexpensive to manufacture the nozzle according to the invention, it is also inexpensive to replace it, if a clogging of the nozzle should occur unexpectedly, e.g. due to polluted water being used.

The system may also comprise only one nozzle pipe, which is then located under the roof and comprises interspaced, downwardly directed nozzles mounted in different angle positions.

The nozzle and the system according to the invention are also suitable for moistening as well as cooling field crops (beets) and particularly in orchards and nurseries. The nozzle and the system according to the invention are also suitable as a frost protecting system, in which water mists are made to drift over the area to counteract night frost.

**Claims**

1. A cooling sprinkling system for air-moistening, especially for plants, particularly but not exclusively in hothouses and comprising at least one and preferably two or several nozzle pipes (51, 52) situated at a chosen height above the area to be moistened and extending parallel to the boundaries, preferably the long walls (61, 62) of the area, said nozzle pipes comprising nozzles (1) of the kind, wherein water and pressurized air are conveyed through separate passageways (11, 31) to an orifice area - (22, 32), **characterised** in that the nozzle pipes (51, 52) are placed at a great mutual distance compared to the width of the area or at at least one side of the area, that each nozzle pipe (51, 52) in addition to a tube for pressurized air (53) comprises a hose (56) for sucking up essentially non-pressurized water, and in that the nozzles (1, A, B, C, D) are upwardly inclined, that the water passage duct (31) until the orifice area has the shape of a tube with an essentially constant inner diameter and in the orifice area opens like a funnel or a cone, and that the orifice edge (32) of the core is spaced at or a short distance outside the discharge orifice for pressurized air.

2. A cooling sprinkling system as claimed in claim 1 and comprising two nozzle pipes, **characterised** in that the nozzle pipes (51, 52) are placed at a mutual distance of more than 10 m, preferably more than 15 m and particularly at a distance of about 20 m or more, and that the nozzles (A, B) on one of the nozzle pipes (51) are placed opposite the center of the cavity between the nozzles (C, D) on the second nozzle pipe (52), that the cavities between the nozzles on each nozzle pipe are not less than about 3 m, and that the nozzles face each other.

3. A cooling sprinkling system as claimed in claim 1 or 2, **characterised** in that the axis of the nozzles (A, B, C, D) form an angle of between 5 and 10° relative to the horizontal plane.

4. A nozzle for a cooling sprinkling system and of the kind where water and pressurized air are conveyed through separate passageways (11, 31) to an orifice area (22, 32) and comprising a pressurized air nozzle head (20) with only one discharge orifice (22) for pressurized air and surrounding a core led through the nozzle head and at a distance therefrom to form a cavity, **characteris ed** in that the water passage duct (31) until the orifice area has the shape of a tube with an essentially constant inner diameter and in the orifice area opens like a funnel or a cone, the vertex of which is situated in the water passage duct (31) and on its axis, and that the orifice edge (32) of the core forming the water discharge orifice (32) is placed relative to the discharge orifice for pressurized air in an area limited by a first loca tion a short distance outside the orifice surface of the discharge orifice for pressurized air of the nozzle head (20, Figure 1) and by a second location immediately outside the discharge orifice for pressurized air.

5. A nozzle as claimed in claim 4, **charactterised** in that the conical water discharge orifice of the core (30) ends in a sharp, outer, annular edge (32).

6. A nozzle as claimed in claim 4 or 5, wherein the core (30) in service position is permanently secured relative to the pressurized air nozzle head - (20) and a nozzle body (1) with a through-going hole (11) for conveying pressurized air in such a manner that the nozzle is adapted to a specific area with regard to the plants to be grown there as well as to the width of the area, **characterised** in that the core (30) comprising a water feed tube - (40) fixedly situated therein and connected to the water passage duct (31) initially is mounted non-rotatably, but axially displaceably in the through-going hole of the nozzle body (1), that a radial, axially oblong bore (5) is provided in the wall of the nozzle body (1), that the core is displaced axially in the hole (11) between an upper location and a lower location by the water feed tube (40) firmly connected to the core (30) being displaced in the axially oblong bore (5) until the desired location has been found, that the water feed tube (40) and thus the core (30) after adjustment of the location of the water discharge orifice are fixed relative to the discharge orifice for pressurized air in the chosen position by friction, welding or adhesion.

7. A nozzle as claimed in one or several of the preceding claims 4-6, **characterised** in that the axially oblong bore (5) and the core (30) are of such a length that the water discharge orifice by the displacement of the core are displaceable from a very short distance outside the discharge orifice for pressurized air (22) to about 5, and preferably about 2 mm outside the discharge orifice for pressurized air.

8. A nozzle as claimed in one or several of the preceding claims 4 to 7, **characterised** in that the core (30) within the cavity (21) of the nozzle head - (20) on its outside has the shape of a cone, and at the area opposite the orifices on its outside has the shape of an hourglass.

9. A nozzle as claimed in one or several of the preceding claims 4-8, wherein the core (30) is adapted for a guided insertion into the through-going axial hole (11) of the nozzle body (1) and for forming flow paths for the pressurized air, **characterised** in that the core seen in cross-section forms passage ducts for the pressurized air and comprises contact faces (35, 36) abutting the cylindrical wall of the hole (11) of the nozzle body (1).

10. A nozzle as claimed in one or several of the preceding claims 4-9, **characterised** in that of its individual parts, namely the nozzle body (1), the nozzle head (20) mounted thereon, the core (30) placed therein and the feed tube (40) are at least the nozzle head (20) and the core (30) made of an electrially non-conductive material, especially hard plastics.

Fig.1

Fig.2

**Fig.3**

**Fig.4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CH-A- 282 278 (DORESA AG)<br><br>* Figures 4-6; page 4, lines 60-78; claims I,II; subclaims 3,8 * | 1,2,4-10 | A 01 G 13/06<br>A 01 G 9/24 |
| Y | DE-C- 803 260 (TROCKELS & GROENING)<br>* Whole document * | 1,2,4-6 | |
| A | | 3 | |
| Y | FR-A-2 281 906 (PORCELAINFABRIKERNE BING & GRONDAHL)<br>* Claims 3,5,6; figure 1 * | 7,10 | |
| A | | 4 | TECHNICAL FIELDS SEARCHED (Int. Cl.4) |
| Y | DE-B-2 757 522 (BEHR)<br>* Figures 1,2; claims 4-6; column 5, line 50 - column 6, line 57 * | 8 | A 01 G<br>B 05 B |
| A | | 4-7 | |
| Y | US-A-3 059 860 (HOHN)<br>* Figures 1,3,4; column 2, lines 34-70; claim 1 * | 9 | |
| | ---      -/- | | |

The present search report has been drawn up for all claims

| Place of search | Date of completion of the search | Examiner |
|---|---|---|
| THE HAGUE | 01-07-1986 | MEINDERS H. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | --- | 4-8 | |
| A | CH-A- 167 073 (PERROT) <br> * Whole document * <br> --- | 1-3 | |
| A,D | FR-A-2 444 501 (NORDSON CORP.) <br> * Claims 3,4,6; figures 4,6 * & <br> DE - A - 2 950 341 <br> --- <br><br> ----- | 4,10 | |

TECHNICAL FIELDS SEARCHED (Int. Cl.4)

The present search report has been drawn up for all claims

| Place of search | Date of completion of the search | Examiner |
|---|---|---|
| THE HAGUE | 01-07-1986 | MEINDERS H. |